# EUROPÄISCHE PATENTANMELDUNG

(11) **EP 1 852 405 A2**
(43) Veröffentlichungstag der Anmeldung: **07.11.2007**
(21) Anmeldenummer: 07008160.9
(22) Anmeldetag: 21.04.2007
(51) Int. Cl.: C04B 35/63, C08G 77/18, C04B 35/043, C04B 35/101, C04B 35/103, C04B 35/567, C04B 35/66

(54) **Reaktives flüssiges Keramikbindemittel**

(30) Priorität: 05.05.2006 DE 102006020967
(71) Anmelder: Goldschmidt GmbH, 45127 Essen (DE)
(72) Erfinder: Ebbrecht, Thomas Dr., 58300 Wetter (DE); von Rymon Lipinski, Tadeusz, Dr., 53125 Bonn (DE); Silber, Stefan Dr., 47804 Krefeld (DE); Weyershausen, Bernd Dr., 45127 Essen (DE)

(57) **Zusammenfassung**

Der Gegenstand der vorliegenden Patentanmeldung betrifft reaktive, flüssige Keramikbindemittel, geeignet zur Herstellung von keramischen Erzeugnissen aus Keramikpulver, dadurch gekennzeichnet, dass das reaktive, flüssige Keramikbindemittel, organomodifizierte Siloxanverbindungen aufweist, wobei die flüssigen organomodifizierten Siloxanverbindungen Organoalkoxysiloxaneinheiten gemäß der allgemeinen Formel (I) 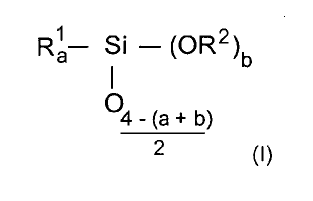 aufweisen, worin
R¹ = Alkylrest und/oder Arylrest,
R² = H und/oder Alkylrest mit 1 bis 4 Kohlenstoffatomen,
a ≥ 0 und ≤ 2 und
b > 0 und ≤ 3,
mit der Maßgabe, dass a + b ≥ 1 und ≤ 4 ist.

## Beschreibung

Der Gegenstand der vorliegenden Erfindung betrifft ein reaktives, flüssiges Bindemittel, geeignet für die Bindung von Keramikpartikeln zur Herstellung von keramischen Erzeugnissen, insbesondere feuerfesten, keramischen Erzeugnissen, aus Keramikpulver. Der Gegenstand der Erfindung betrifft ferner die Verwendung des Bindemittels und ein Verfahren zur Herstellung vorgenannter keramischer Erzeugnisse, sowie keramische Erzeugnisse als solche, wobei feuerfeste, keramische Erzeugnisse erfindungsgemäß besonders bevorzugt sind.

Feuerfeste Keramikerzeugnisse, nahstehend auch als "FF-Werkstoffe" bezeichnet, werden zum Schutz vor hohen Temperaturen in zahlreichen Industrieanlagen eingesetzt. Die wichtigsten feuerfesten Werkstofftypen sind:
- Geformte dichte Erzeugnisse, mit einer Porosität ≤45 Vol.%, wie Steine und Bauteile,
- Geformte wärmedämmende Erzeugnisse, mit einer Porosität ≥45 Vol.%, wie Feuerleichtsteine,
- Ungeformte feuerfeste Erzeugnisse, wie Feuerbetone, Rammmassen, Spritzmassen, Stampfmassen und dergleichen,

Herkömmliche feuerfeste Erzeugnisse werden aus pulverigen Rohstoffen hergestellt. Die Korngröße der Pulver liegt dabei in einem relativ breiten Bereich, zwischen einigen Mikrometer bis mehreren Millimetern. Vereinzelt werden auch Rohstoffe mit einer Partikelgröße > 10 mm verwendet. Entsprechend werden die Pulver als grobkörnige, mittelkörnige, feinkörnige, und feinstkörnige Kornfraktion bezeichnet.

Aus dem Stand der Technik sind feste, verzweigte oder vernetzte, hochmolekulare organomodifizierte Siloxane oder feste Phenylmethylpolysiloxane bekannt.

Die WO 93/01146 betrifft ein Bindemittel für thermoplastische Formmassen, enthaltend mindestens ein thermoplastisches Siliconharz, mit einer Erweichungstemperatur zwischen 30° C und 200° C, für die Herstellung von Formteilen aus Keramik oder Metall aus entsprechenden Keramik- oder Metallpulvern. Solche thermoplastischen Formmassen finden u.a. Anwendung bei Verfahren wie Spritzgießen, Extrudieren oder Warmpressen, bei denen ein temperaturabhängiges Fließverhalten notwendig ist. Die angegebenen Siliconharze werden erfindungsgemäß bevorzugt ohne Katalysatoren eingesetzt, so dass eine weitere Vernetzung und Härtung während des Formgebungsprozesses unterbleibt.

Die Verwendung dieser vorstehend genannten festen Siloxanverbindungen als Keramikbindemittel, hat den Nachteil, dass sich sehr homogene Mischungen mit keramischen Materialien nicht oder nur unzureichend herstellen lassen. Außerdem wird bei Verwendung solcher Bindemittel keine ausreichend hohe Grünfestigkeit des geformten Keramikerzeugnisses aus Keramikpartikeln ohne eine Temperaturbehandlung bei höheren Temperaturen, erhalten. Ein weiterer Nachteil der im Stand der Technik bekannten Bindemittel ist, dass man sehr hohe Brenntemperaturen, üblicherweise von oberhalb 1000° C benötigt, um feuerfeste Keramikerzeugnisse mit ausreichenden mechanischen Eigenschaften wie Kaltdruckfestigkeit zu erreichen. Darüber hinaus benötigt man hohe Drücke und lange Brennzeiten, was mit einem hohen Energieaufwand verbunden ist.

Ferner betrifft die WO 93/01146 ein Bindemittel für thermoplastische Formmassen, wobei die Formmassen ausschließlich oberhalb der Erweichungstemperatur des Siliconharzes plastisch verarbeitet werden und unter Druck in Formen, deren Temperatur unterhalb der Erweichungstemperatur des Siliconharzes liegt, eingebracht werden. Geformte, keramische Erzeugnisse mit einer ausreichenden Grünfestigkeit lassen sich gemäß der Lehre der WO 93/01146 bei einer nicht plastischen Verarbeitung, beispielsweise uniaxial, isostatisch, mit Schlickerguss, durch Stampfen, Spritzen, insbesondere bei Temperaturen unterhalb der Erweichungstemperatur des Siliconharzes oder dergleichen, nicht herstellen. Außerdem lassen sich mit dem in der WO 93/01146 beschriebenen Bindemittel und Verfahren ungeformte keramische Erzeugnisse, insbesondere feuerfeste Werkstoffe, nicht herstellen.

Überraschenderweise wurde nunmehr gefunden, dass sich Keramikerzeugnisse, insbesondere feuerfeste Keramikerzeugnisse, bereits bei niedrigen Behandlungstemperaturen zur Verfügung stellen lassen, die eine unerwartet hohe Kaltdruckfestigkeit aufweisen.

Die erfindungsgemäße Aufgabe wird durch ein reaktives, flüssiges Keramikbindemittel gelöst, welches zur Herstellung von keramischen Erzeugnissen, insbesondere feuerfesten Keramikerzeugnissen, aus Keramikpulver, geeignet ist, wobei das reaktive, flüssige Keramikbindemittel organomodifizierte Siloxanverbindungen aufweist, wobei die organomodifizierten Siloxanverbindungen Organoalkoxysiloxaneinheiten gemäß der allgemeinen Formel (I) 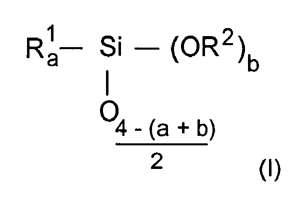 aufweisen, worin
R¹ = Alkylrest und/oder Arylrest,
R² = H und/oder Alkylrest mit 1 bis 4 Kohlenstoffatomen,
a ≥ 0 und ≤ 2 und
b > 0 und ≤ 3,
mit der Maßgabe, dass a + b ≥ 1 und ≤ 4 ist.

Bei der Formel (I) handelt es sich um eine durchschnittliche Formel der Organoalkoxysiloxaneinheiten der flüssigen, organomodifizierten Siloxanverbindung.

Der Anteil H für R² kann ≥ 0 % und ≤ 10 %, bevorzugt ≥ 0 % und ≤ 5 %, besonders bevorzugt ≥ 0 % und ≤ 1 %, und insbesondere bevorzugt 0% sein.

Der Begriff "keramisches Erzeugnis" bzw. "Keramikerzeugnis" umfasst unter anderem keramische Massen, formstabile Keramikkörper sowie feuerfeste keramische Erzeugnisse.

Bevorzugt weist das reaktive, flüssige Keramikbindemittel wenigstens eine flüssige organomodifizierte Siloxanverbindung auf, wobei die flüssige, organomodifizierte Siloxanverbindung Organoalkoxysiloxaneinheiten gemäß der allgemeinen Formel (I) aufweist.

Der Begriff "flüssig", wie in der vorliegenden Erfindung gebraucht, hat die Bedeutung, dass die entsprechende Substanz, insbesondere die flüssige, organomodifizierte Siloxanverbindung oder das entsprechende Gemisch bei Raumtemperatur, d.h. 25° C, flüssig ist.

Vorzugsweise kann vorgesehen sein, dass die Substituenten R¹ und/oder R² der Organoalkoxysiloxane des flüssigen, organomodifizierten Silioxanverbindung/en, wie nachstehend definiert sind, worin
- R¹ =: Phenyl und/oder C₁-C₁₆-Alkylrest sind, vorzugsweise ist R¹ = C₁-C₁₂-Alkylrest, weiter bevorzugt ist R¹ = C₁-C₈-Alkylrest, besonders bevorzugt ist R¹ = C₁-C₄-Alkylrest, wobei am meisten bevorzugt ist R¹ = Methyl und/oder Ethyl; und/oder
- R² =: H, Methyl, Ethyl, Propyl, Iso-Propyl, Butyl, tert-Butyl, wobei Methyl und/oder Ethyl am meisten bevorzugt sind.

Es kann weiterhin erfindungsgemäß bevorzugt sein, dass a = 0,5 bis 1,8 ist, vorzugsweise ist a = 0,7 bis 1,7, und weiter bevorzugt ist a = 1,0 bis 1,5, mit der Maßgabe, dass a + b ≤ 4 und vorzugsweise a + b ≤ 3 ist.

Außerdem kann erfindungsgemäß vorgesehen sein, dass b = 0,1 bis 2,5 ist, vorzugsweise ist b = 0,2 bis 2,3 , noch weiter bevorzugt ist b = > 0,3 bis 2,0 und besonders bevorzugt ist b = > 0,3 bis 1,2, mit der Maßgabe, dass a + b ≤ 4 und vorzugsweise a + b ≤ 3 ist.

Die reaktiven, flüssigen erfindungsgemäßen organomodifizierten Siloxanverbindungen können ein Molekulargewicht von 120 bis 100.000, vorzugsweise 250 bis 80.000, bevorzugt 500 bis 60.000, noch bevorzugt 750 bis 50.000 und besonders bevorzugt 1.000 bis 30.000 aufweisen.

Ferner kann das erfindungsgemäße, reaktive, flüssige Keramikbindemittel ein Lösungsmittel enthalten, ausgewählt aus der Gruppe, umfassend organische Lösungsmittel, vorzugsweise flüssige Kohlenwasserstoffe, insbesondere mit einem Siedepunkt zwischen 40° C bis 100° C, Alkohol und/oder Aceton. Durch den Zusatz von Lösemitteln lässt sich beispielsweise die Mischbarkeit mit Keramikpulver verbessern.

Es kann bevorzugt sein, dass das reaktive, flüssige Keramikbindemittel, insbesondere ein Keramikbindemittel enthaltend flüssige, organomodifizierten Siloxanverbindungen, in einer Mischung mit Wasser, besonders bevorzugt als eine wässrige Emulsion, eingesetzt wird. Durch die Verwendung einer wässrigen Emulsion in Kombination mit dem Keramikpulver lässt sich beispielsweise eine bereits bei Raumtemperatur vergussfähige oder spritzfähige Masse herstellen.

Zur Verbesserung der Eigenschaften beispielsweise in Bezug auf Verarbeitbarkeit, Handhabung, Trocknungsvorgang, Brennvorgang, Festigkeit, Korrosionsbeständigkeit und/oder Oxidationsbeständigkeit, der keramischen Masse und/oder Keramikerzeugnisses, kann dem Keramikbindemittel mindestens ein Additiv zugesetzt sein, wobei dieses Additiv unterschiedlich zu der organomodifizierten Siloxanverbindung(en) auf Basis der Formel (I) ist und ausgewählt ist aus der Gruppe umfassend ein anorganisches Bindemittel, ein anorganisches Salz der Schwefelsäure, ein anorganisches Salz der Salzsäure, ein anorganisches Salz der Phosphorsäure, Magnesiumchlorid, Magnesiumsulfat, Monoaluminiumphosphat, Alkaliphosphat, Alkalisilikat, Wasserglas, ein organisches Bindemittel, Zellulosederivat, Polyvinylalkohol, Wasser, organische Lösungsmittel, Formentrennmittel, Stabilisatoren, organische Pigmente, anorganische Pigmente, nichtoxidische Stoffe, vorzugsweise Kohlenstoff, Metallpulver, Metallfasern, Keramikfasern, Glasfasern, Naturfasern, Kunststofffasern, Metalloxide, Boride, Carbide, Nitride, Oxynitride, Oxycarbide, Silicide, Polymere, Katalysator und/oder Carbonfasern Bevorzugt kann der Zusatz von sehr reaktiven nanoskaligen, oxidischen und/oder nichtoxidischen Pulvern und besonders bevorzugt kann der Zusatz von Nano-Aluminiumoxid und/oder von seinen Precursoren sein.

Weitere Additive, die erfindungsgemäß besonders zur Verbesserung der Verarbeitkeit, Handhabung, Gründichte und -festigkeit usw., verwendbar sind, umfassen Abbindeverzögerer, Abbindebeschleuniger, Presshilfsmittel, Gleitmittel, Stellmittel, Entschäumer, Verflüssiger, Sintermittel und dergleichen

Besonders bevorzugt ist die Verwendung von flüssigen, organomodifizierten Siloxanverbindungen des erfindungsgemäßen Bindemittels in Kombination mit weiteren Additiven, wie organische und/oder anorganische Bindemittel, Wasser, organische Lösungsmittel, funktionelle Zusatzstoffe wie Kohlenstoff, Boride, Metallpulver, Carbide, Silizide, Oxide und dergleichen.

Ebenfalls kann die Verwendung von Keramikbindemittel in Kombination mit hydraulischen Bindemitteln, wie hydratisierbares Aluminiumoxid (sog. Rho-Aluminiumoxid), Calciumaluminat-Zement, Portlandzement, Gips gegebenenfalls mit Wasser in variablen Mengen, vorteilhaft sein.

Dem Keramikbindemittel kann bevorzugt nanoskalige Metalloxide, bevorzugt nanoskaliges Aluminiumoxid, zugesetzt sein, was zu einer verbesserten Kaltdruckfestigkeit von Keramikerzeugnissen führen kann.

Es wurde ferner überraschend gefunden, dass die Verwendung des erfindungsgemäßen, reaktiven, flüssigen Keramikbindemittels, in Verbindung mit einem Keramikpulver bereits bei niedrigen Brenntemperaturen zu stabilen, insbesondere feuerfesten, Keramikerzeugnissen führt.

Feuerfeste keramische Erzeugnisse, werden allgemein und in der Beschreibung der vorliegenden Erfindung auch als feuerfeste keramische Werkstoffe oder FF-Werkstoffe bezeichnet.

Ein weiterer Vorteil der vorliegenden Erfindung ist es, dass keramische Erzeugnisse mit einer ausreichenden Grünfestigkeit, durch Verwendung des erfindungsgemäßen, reaktiven, flüssigen Keramikbindemittels bei Temperaturen < 30° C, vorzugsweise bei Raumtemperatur, hergestellt werden können.

Vorteilhaft ist, dass sich durch die Verwendung der erfindungsgemäßen Keramikbindemittel die Brenntemperatur und/oder die Brennzeit und damit der Energiebedarf bei der Herstellung von Keramikerzeugnissen, insbesondere feuerfesten Erzeugnissen, senken lassen. Außerdem lässt sich bei Verwendung fossiler Energieträger, bedingt durch den geringeren Energiebedarf, der CO₂- und NOₓ-Ausstoß reduzieren.

Es wurde auch beobachtet, dass sich die Brennzeiten, zumindest in den meisten Fällen, verkürzen lassen, ohne dass es hinsichtlich der Materialeigenschaften insbesondere der Festigkeit der unter Verwendung der erfindungsgemäßen Keramikbindemittel hergestellten Keramikerzeugnisse im Vergleich zu konventionellen d.h. nach dem Stand der Technik hergestellten feuerfesten Keramikerzeugnisse nachteilig wäre.

Ferner wurde in vorteilhafter Weise beobachtet, dass es bei Verwendung des erfindungsgemäßen, reaktiven, flüssigen Keramikbindemittels im Temperaturbereich zwischen beispielsweise 100° C und 1000° C, vorzugsweise 200° C und 800° C, zu keinem oder allenfalls nur einem geringen Abfall der Werkstofffestigkeit, d.h. Kaltdruckfestigkeit [MPa], kommt.

Die Verwendung des erfindungsgemäßen, reaktiven, flüssigen Keramikbindemittels kann zu keiner bzw. keiner signifikanten Bildung niedrig schmelzender Phasen in der Keramik während des Herstellungsverfahrens führen. Dies ist Vorteilhaft, da das Auftreten solcher Phasen sehr nachteilig für die Werkstoffeigenschaften, insbesondere im Hinblick auf deren Stabilität bei hohen Temperaturen ist.

Noch ein Vorteil des erfindungsgemäßen, reaktiven, flüssigen Keramikbindemittels ist es, dass es mit oder ohne Wasserzusatz dem Keramikerzeugnis eine hohe Formfestigkeit verleiht und deshalb auch für Hydratation anfällige Keramikerzeugnisse, beispielsweise basische FF-Werkstoffe, bevorzugt verwendbar ist.

Keramikerzeugnisse schließen im Sinne dieser Erfindung auch getrocknete, getemperte und/oder gebrannte Keramikerzeugnisse ein. Der Begriff Keramikerzeugnis, wie in der vorliegenden Beschreibung gebraucht, umfasst auch sogenannte Grünkörper. Insbesondere umfasst der Begriff Keramikerzeugnis hitzebeständige und/oder feuerfeste Keramikerzeugnisse (FF-Werkstoffe). Des weiteren werden unter einem Keramikerzeugnis auch Erzeugnisse, wie Formkörper und Werkstoffe, verstanden, bei denen es sich um einen sogenannten Verbundwerkstoff handelt, d.h. die aus einem keramischen Werkstoff und mindestens einem anderem Werkstoff bzw. einer anderen Phase aufgebaut sind. Diese können auch als wenigstens eine keramische Schicht, vorzugsweise eine keramische Oberflächenbeschichtung vorliegen.

Mittels des erfindungsgemäßen, reaktiven, flüssigen Keramikbindemittels lassen sich geformte und ungeformte keramische Erzeugnisse, insbesondere hitzebeständige und /oder feuerfeste, ungebrannte und/oder gebrannte keramische Formkörper, ungeformte feuerfeste Erzeugnisse, beispielsweise Betone, Stampfmassen, Gießmassen, Beschichtungen oder Überzüge mit ausgezeichneten physikalischen und mechanischen Eigenschaften und verbesserten Herstellungsparametern erhalten.

Unter Herstellungsparametern sind erfindungsgemäß insbesondere die Parameter zur Herstellung der ungeformten Erzeugnisse, der ungebrannten Erzeugnisse, der Grünkörper, sowie der gebrannten Keramikerzeugnisse zu verstehen.

Das erfindungsgemäße, reaktive, flüssige Keramikbindemittel kann dem Keramikpulver, bezogen auf das Gesamtgewicht des Keramikpulvers, mit einem Gewichtsanteil von 0,01 Gew.-% bis 70 Gew.-%, vorzugsweise von 0,5 Gew.-% bis 50 Gew.-% und bevorzugt von 0,1 Gew.-% bis 30 Gew.-% zugesetzt werden.

Es hat sich in überraschenderweise gezeigt, dass das reaktive, flüssige Keramikbindemittel bereits in deutlich geringeren Mengen, bezogen auf das keramische Pulver, wirksam ist, als die aus dem Stand der Technik bekannten Verbindungen. Deutliche Effekte können bereits mit Mengen der organomodifizierten Siloxanverbindungen von weniger als 5 Gew.-%, bezogen auf das Gesamtgewicht des Keramikpulvers, erzielt werden. Erfindungsgemäß bevorzugt sind Mengen der organomodifizierten Siloxanverbindungen im Bereich von 0,05 Gew.-% bis < 10 Gew.-%, insbesondere 0,1 Gew.-% bis 5 Gew.-%, besonders bevorzugt 0,5 Gew.-% bis 3 Gew.-%, jeweils bezogen auf die Menge an keramischem Pulver.

Wenn die Menge der hinzugegebenen organomodifizierten Siloxanverbindungen unter 0,01 Gew.-% liegt, ist es sehr schwierig, ein gebranntes Erzeugnis mit hoher Festigkeit zu erhalten, während bei einer Zugabe von mehr als 10 Gew.-%, insbesondere mehr als 15 Gew.-% der organomodifizierten Siloxanverbindungen, ein Anschwellen des gebrannten Erzeugnisses beobachtet werden kann, wodurch seine Festigkeit und Gefügedichte beeinträchtigt werden kann.

Erfindungsgemäß lässt sich das reaktive, flüssige Keramikbindemittel zur Herstellung von keramischen Erzeugnissen, insbesondere von geformten und ungeformten, gebrannten und ungebrannten feuerfesten, keramischen Erzeugnissen, aus Keramikpulver/n verwenden.

Ein weiterer Gegenstand der vorliegenden Erfindung betrifft eine keramische Masse, die erfindungsgemäßes Keramikbindemittel und Keramikpulver aufweist.

Die Keramikmassen können direkt verwendet werden oder zuerst zu Pulvern oder Granulaten verarbeitet werden.

In überraschender Weise wurde außerdem gefunden, dass sich Keramikmassen enthaltend die flüssigen organomodifizierten Siloxanverbindungen, bereits bei Temperaturen unterhalb der Erweichungstemperatur von festen, organomodifizierten Siloxanverbindungen, verarbeiten lassen.

Erfindungsgemäß kann es daher bevorzugt sein, Keramik, enthaltend Keramikpulver und erfindungsgemäßes Keramikbindemittel lediglich unter Druck zu verarbeiten.

Die erfindungsgemäßen Keramikmassen können zur Herstellung von geformten und ungeformten Keramikerzeugnissen, sowie zur Herstellung von gebrannten als auch ungebrannten Keramikerzeugnissen verwendet werden.

Bevorzugt für die Herstellung der Keramikmassen verwendbare Keramikpulver können ausgewählt sein aus der Gruppe umfassend grobkörnige, mittelkörnige, feinkörnige und/oder feinstkörnige keramische Partikel. Geeignete Keramikpartikel können alle typischen, oxidischen, nichtoxidischen, saueren, oder basischen Keramikrohstoffe sowie Mischungen davon umfassen. Besonders bevorzugt sind Keramikerzeugnisse auf Al₂O₃-Basis. Auch Mischungen dieser Rohstoffe können vorliegen.

Besonders geeignet verwendbare keramische Pulver, insbesondere Mischungen keramischer Pulver sowie deren Rohstoffe umfassen:
Oxide, wie BeO, MgO, Al2O3, SiO2, CaO, TiO2, Cr2O3, MnO, Fe2O3, ZnO, SrO, Y2O3, BaO, CeO2, UO2; und/oder
Carbide, wie Be2C, Be4C, Al4C3, SiC, , TiC, Cr3C2, Mn3C, Fe3C, SrC2, YC2, ZrC, NbC, Mo2C, BaC2, CeC2, HfC, TaC, WC, UC; und/oder
Nitride, wie Be3N2, BN, Mg3N2, AIN, Si3N4, Ca3N2, , TiN, VN, CrN, Mn3N2, Sr3N2, ZrN, NbN, Mo3N2, HfN, TaN, WN2, UN; und/oder
Boride, wie AlB4, CaB6, TiB2, VB2, CrB2, MnB, FeB, CoB, NiB, SrB6, YB6, ZrB2, NbB2, MoB2, BaB6, LaB6, CoB6, HfB2, TaB2, WB, UB4; und/oder
Silicide, wie CaSi, Ti5Si3, V5Si3, CrSi2, FeSi, CoSi, ZrSi2, NbSi2, MoSi2, TaSi2, WSi2; und/oder Mischungen der vorgenannten keramischen Stoffe.

Weitere keramische Partikel die eingesetzt werden können, umfassen oxidische und nichtoxidische Verbindungen, Mischphasen usw., beispielsweise, Mullit (Al₆Si₂O₁₃), Mischkristalle aus dem System Al₂O₃-Cr₂O₃, MgSiO₄, CaSiO₄, ZrSiO₄, MgAl₂O₄, CaZrO₃, SIALON, ALON, und/oder B₄C-TiB₂.

Außerdem können keramische Partikel mit nicht stöchiometrischer Zusammensetzung, wie TiOx-Silicate, Gläser und keramische Materialien mit einer Metallphase erfindungsgemäß verwendet werden.

Erfindungsgemäß verwendbare Keramikpartikel können auch calcinierte Tonerden, reaktive Tonerden, feinstgemahlene, feuerfeste Rohstoffe, wie Microsilica, Feuerfestton und/oder Bindeton umfassen.

Unter grobkörnig sind im Sinne der vorliegenden Erfindung vorzugsweise Körnungen ≥ 1 mm, besonders bevorzugt 1 mm bis 10 mm zu verstehen. Als Mittelkorn werden im Sinne der vorliegenden Erfindung Körnungen von ≥ 0,1 mm bis ≤ 1 mm, bevorzugt 0,2 mm bis 0,5 mm, verstanden.

Unter feinkörnig sind im Sinne der vorliegenden Erfindung vorzugsweise Körnungen von 0,02 mm bis ≤ 0,2 mm, besonders bevorzugt 0,02 mm bis 0,1 mm zu verstehen. Diese Kornfraktion wird üblicherweise im technischen Sprachgebrauch auch als Mehl bezeichnet.

Als Feinstkorn sind, insbesondere reaktive feuerfeste Komponenten, mit einer mittleren Korngröße ≤ 15 µm, bevorzugt ≤ 5 µm, zu verstehen.

Zur Erzielung guter Festigkeitseigenschaften der erfindungsgemäßen keramischen Erzeugnisse, kann die Verwendung von Keramikmassen enthaltend Keramikbindemittel in Kombination mit sogenannten funktionellen Zusatzstoffen, wie oxidische und/oder nichtoxidische Mikropulver, Nanopulver, Metallpulver, Metall-, Keramik-, Glas-, Kunststoff-Fasern und/oder -geweben, vorteilhaft sein.

Besonders bevorzugt ist, wenn die Keramikmasse nanoskalige Metalloxide, bevorzugt nanoskaliges Aluminiumoxid, aufweist.

Es hat sich für einige Verfahrensschritte und/oder Anwendungszwecke als vorteilhaft erwiesen, Korngrößen unterhalb von 1µm zumindest teilweise zu verwenden oder mitzuverwenden, das heißt, nanoskalige keramische Pulver dem keramischen Pulvergemisch zuzusetzen.

Die grobkörnigeren Komponenten können in Mengen von ≤ 100 Gew.-%, vorzugsweise in Mengen ≤90 Gew.-%, besonders bevorzugt in Mengen von 15 Gew.-% bis 80 Gew.-%, bezogen auf das Gesamtgewicht der Keramikmasse, in der Keramikmasse vorliegen.

Die mittelkörnigen Komponenten können in Mengen von ≤ 100 Gew.-%, vorzugsweise in Mengen ≤ 40 Gew.-%, besonders bevorzugt in Mengen von 3 Gew.-% bis 20 Gew.-%, bezogen auf das Gesamtgewicht der Keramikmasse, in der Keramikmasse vorliegen.

Die feinkörnigen Komponenten können in Mengen von ≤ 100 Gew.-%, vorzugsweise in Mengen ≤ 95 Gew.-%, besonders bevorzugt in Mengen von 5 Gew.-% bis 80 Gew.-%, bezogen auf das Gesamtgewicht der Keramikmasse, in der Keramikmasse vorliegen.

Die feinstkörnigen Komponenten können in Mengen von ≤ 100 Gew.-%, vorzugsweise in Mengen von ≤ 50 Gew.-%, besonders bevorzugt in Mengen von 0.1 Gew.-% bis 35 Gew.-%, bezogen auf das Gesamtgewicht der Keramikmasse, in der Keramikmasse vorliegen..

Der Begriff "Gesamtgewicht der Keramikmasse", wie vorstehend gebraucht betrifft die Keramikmasse ohne Bindemittel.

Weiterhin bevorzugt ist, dass die Keramikmasse rieselfähig ist. Die Keramikmasse kann ein Schüttgewicht von 500 g/l bis 2000 g/l, vorzugsweise von 600 g/l bis 1800 g/l, weiter bevorzugt von 700 g/l bis 1600 g/l, bevorzugt von 800 g/l bis 1500 g/l und besonders bevorzugt von 850 g/l bis 1200 g/l aufweisen.

Weiterhin können der Keramikmasse Additive, Zusatzstoffe und/oder Bindemittel, ausgewählt aus der Gruppe umfassend organische Bindemittel, anorganische Bindemittel, Wasser und dergleichen zugesetzt werden.

Die erfindungsgemäße Keramikmasse kann in Form einer Spritzgussformmasse, Stampfmasse, Rammmasse, Gießmasse, Anstrichmasse oder Überzugsmasse vorliegen.

Das keramische Pulver kann Korngrößen im Nanobereich aufweisen und kann vorzugsweise aus Oxiden, Carbiden, Nitriden, Boriden und/oder Siliciden, vorzugsweise Oxiden des Aluminiums bestehen.

Die erhaltene Keramikmasse kann direkt für das erfindungsgemäße Verfahren eingesetzt werden, sie kann aber auch an Luft, unter Vakuum oder in einer Atmosphäre aus Inertgas, Kohlenmonoxid. Kohlendioxid, Stickstoff und/oder Kohlenwasserstoffen calciniert und die calcinierte Formmasse pulverisiert und als keramisches, vorzugsweise nanoskaliges, Pulver verwendet werden.

Besonders bevorzugt sind Keramikmassen, die keramische Pulver enthalten, wie Magnesiumsilicate, Aluminiumsilicate, Spinelle, Siliciumdioxid, Magnesiumoxid, Calciumoxid, Chromoxid, Aluminiumoxid, Zirkonoxid, Zinkoxid, Zirkonsilicat, Siliciumcarbid, SIALON. ALON, Siliciumnitrid und/oder Mischungen davon.

Die Keramikmassen können zusätzlich Katalysatoren, übliche Zusatzstoffe, Bindemittel und/oder Additive aufweisen. Die Keramikmassen können insbesondere auch geringe Mengen an Formentrennmittel, Stabilisatoren und/oder Pigmenten enthalten.

Ferner kann die Verwendung von Keramikmassen enthaltend Keramikbindemittel in Kombination mit hydraulischen Bindemitteln, wie Tonerdezement, Portlandzement, gegebenenfalls mit Wasser in variablen Mengen, kann ebenfalls vorteilhaft sein.

Ein weiterer Gegenstand der vorliegenden Erfindung betrifft ein Verfahren zur Herstellung von Keramikerzeugnissen, insbesondere von keramischen FF-Werkstoffen.

Das erfindungsgemäße Verfahren zur Herstellung von geformten Keramikerzeugnissen lässt sich ganz allgemein in zwei Ausführungsformen einteilen.

Bei der ersten Ausführungsform kann die Formmasse, bei der es sich um eine Mischung aus dem keramischen Pulver und dem erfindungsgemäßen Bindemittel handelt, zuerst unter einem Druck von > 1 MPa, vorzugsweise zwischen ≥ 100 MPa und ≤ 200 MPa, gepresst werden, um einen Formkörperrohling bzw. Grünkörper mit einer definierten äußeren Form herzustellen. Das Pressen kann mittels herkömmlicher Technologien erfolgen, beispielsweise uniaxial, isostatisch oder dergleichen. Der erhaltene Keramikkörper kann ohne eine weitere Temperaturbehandlung der Verwendung zugeführt bzw. einem anschließenden Brand unterzogen werden, wobei ein Keramikerzeugnis, vorzugsweise ein feuerfestes Keramikerzeugnis erhalten wird.

Gemäß der zweiten Ausführungsform wird die Mischung aus dem keramischen Pulver und dem erfindungsgemäßen reaktiven, flüssigen Bindemittel, gleichzeitig geformt und erhitzt und/oder gebrannt (so genanntes Heißpreßverfahren). Hierbei wird die Mischung unter einem Druck von > 1 MPa, vorzugsweise 5 MPa bis 100 MPa, bei einer höheren Temperatur als die Raumtemperatur, vorzugsweise > 50 °C gepresst. Das Pressen kann mittels herkömmlicher Technologien erfolgen, beispielsweise uniaxial, isostatisch oder dergleichen. Der erhaltene Keramikkörper kann ohne eine weitere Temperaturbehandlung der Verwendung zugeführt bzw. einem anschließenden Brand unterzogen werden, wobei ein Keramikerzeugnis, vorzugsweise ein feuerfestes Keramikerzeugnis erhalten wird.

Ein geeignetes Verfahren zur Herstellung von geformten keramischen Erzeugnissen, insbesondere geformten feuerfesten keramischen Erzeugnissen, umfasst die nachstehenden Schritte:
a) Mischen von erfindungsgemäßen reaktiven, flüssigen Keramikbindemittel, mit Keramikpulver zwecks Erzeugung einer Formmasse,
b) Verfestigung der Formmasse erhalten aus Schritt a) mittels Druckbehandlung und/oder Temperaturbehandlung, wobei ein formstabiles keramisches Erzeugnis erhalten wird.

Ein weiteres Verfahren zur Herstellung von ungeformten keramischen Erzeugnissen, insbesondere feuerfesten keramischen Erzeugnissen, umfasst die nachstehenden Schritte:
a) Mischen von erfindungsgemäßen Keramikbindemittel mit Keramikpulver;
b) ggf. Zusatz von Additiven, Hilfs- und/oder Zusatzstoffen und/oder anderen Bindemitteln;
c) Erzeugung einer keramischen Masse, wie Betonmasse, Gießmasse, Stampfmasse oder Rammmasse.

Das reaktive, flüssige Keramikbindemittel, insbesondere die flüssige organomodifizierte Siloxanverbindung, kann, bezogen auf das Gesamtgewicht des Keramikpulvers, in der Formmasse oder keramischen Masse mit einem Gewichtsanteil von 0,01 Gew.-% bis 70 Gew.-%, vorzugsweise von 0,5 Gew.-% bis 50 Gew.-% und bevorzugt von 0,1 Gew.-% bis 30 Gew.-% enthalten sein.

Um keramische Verbundmaterialien herzustellen, kann man die aus Schritt a) des Verfahrens erhaltene Mischung auf einen formstabilen Träger aufbringen. Anschließend kann man dann die Keramikmasse trocknen und/oder tempern und/oder brennen. Die Temperaturbeständigkeit und/oder Größe des Trägermaterials ist u.a. entscheidend ob das Verbundmaterial nur getrocknet oder weiteren Temperaturbehandlungsschritten wie Tempern und/oder Brennen ausgesetzt wird.

Dem Keramikpulver kann, wie bereits vorstehend beschrieben, ein Additiv, Zusatzstoff und/oder Bindemittel mit einem Gewichtsanteil von 0.01 Gew.-% bis 50 Gew.-%, vorzugsweise von 0.05 Gew.-% bis 30 Gew.-% und bevorzugt von 0.1 Gew.-% bis 20 Gew.-% bezogen auf das Gesamtgewicht des Keramikpulvers, zugesetzt sein.

Vorzugsweise kann der aus Schritt b) erhaltene Grünkörper verfestigt werden, in dem
- der Grünkörper bei einer Temperatur von ≥ 25° C bis < 200° C getrocknet; und/oder
- bei einer Temperatur von ≥ 200° C bis < 1.000° C getempert; und/oder
- bei einer Temperatur von ≥ 1.000° C gebrannt wird.

Bei der Herstellung von feuerfesten Erzeugnissen kann es außerdem wichtig sein, dass das erfindungsgemäß verwendete Keramikbindemittel, enthaltend flüssige, organomodifizierte Siloxanverbindungen, während der Temperaturbehandlung mit anderen Bestandteilen der Keramikmasse, vorzugsweise der feuerfesten Keramikmasse, unter Bildung refraktärer Verbindungen reagiert.

In Feuerfest (FF)-Keramikmassen, die mit dem zugesetzten flüssigen, organomodifizierten Siloxanverbindungen keine oder nur unzureichende Festigkeiten bilden, kann eine ausreichende Bindungskraft durch Zusatz eines aktiven Keramikpulvers erreicht werden. Besonders geeignet ist dabei Aluminiumoxid. Geeignet sind auch Al-haltige Stoffe, die nach einem Umwandlungsprozess, z.B. Oxidation, ein reaktives Aluminiumoxid bilden.

Die für die Bindung verantwortliche Reaktion zwischen keramischem Pulver und der organomodifizierten Siloxanverbindungen des erfindungsgemäßen, reaktiven, flüssigen Keramikbindemittels kann bereits bei Raumtemperatur stattfinden. Mit steigender Temperatur verfestigt sich die Bindung. Bereits nach einer Temperaturbehandlung in mittlerem Temperaturbereich, von 400°C bis 1000 °C oder teilweise sogar von 200°C bis 600 °C können die Keramikerzeugnisse, insbesondere keramische FF-Werkstoffe, hohe Festigkeiten erreichen, wodurch ein Hochtemperaturbrand von > 1000 °C nicht notwendig ist.

Die Festigkeit des getrockneten und/oder getemperten und/oder gebrannten Formkörpers kann außerdem noch weiter erhöht werden, indem man ihn mindestens einmal mit:
- organomodifizierten Siloxanverbindungen des erfindungsgemäßen, reaktiven, flüssigen Keramikbindemittels, insbesondere mit flüssigen, organomodifizierten Siloxanverbindungen; und/oder
- einer flüssigen, polymeren Organosiliciumverbindung; und/oder
- mit einer Lösung einer festen, polymeren Organosiliciumverbindung in einem Lösungsmittel; und/oder
- mit einer Schmelze einer festen, polymeren Organosiliciumverbindung;
bei Raumtemperatur und/oder unter Erhitzen imprägniert und an Luft, unter Vakuum und/oder in einer Atmosphäre aus Inertgas, Wasserstoff, Kohlenmonoxid, Kohlendioxid. Stickstoff und/oder Kohlenwasserstoffen auf eine Temperatur von ≥ 200° erhitzt, nachdem der Imprägnierungsgrad, falls erforderlich, durch Druckerhöhung gesteigert wurde.

Der Zusatz von einem Lösungsmittel zum Keramikbindemittel zur Herabsetzung der Viskosität kann den Imprägnierungsvorgang begünstigen.

Unter einem Formkörperrohling ist ein verwendungsfähiger Grünkörper zu verstehen, der eine ausreichend hohe Anfangsfestigkeit hat, um in weiteren Prozessschritten gehandhabt oder maschinell bearbeitet werden zu können.

Zusätzlich können Grünkörper vor der Sinterung gehärtet werden, um so noch festere Grünkörper zu erhalten. Die Aushärtung kann erfolgen durch:
- Auslagerung in einer feuchten Atmosphäre und/oder
- Erhitzen auf eine Temperatur ≥ 30 °C und/oder
- Zusatz von an sich bekannten geeigneten Kondensationskatalysatoren, wie Dibutylzinndilaurat oder Tetrabutyltitanat.

Durch die Verwendung der erfindungsgemäßen Keramikbindemittel, insbesondere Keramikbindemittel, wobei das reaktive, flüssige Keramikbindemittel flüssige, organomodifizierte Siloxanverbindungen aufweist, lässt sich eine ausreichend hohe Grünfestigkeit erreichen. Die hohe Formstabilität bzw. Kalt-Druck-Festigkeit erlaubt, dass die Grünkörper vor dem letztendlichen Temperungs- und/oder Brennvorgang weiter bearbeitet oder geformt werden können, ohne dass es durch die mechanische Beanspruchung zu einer Zerstörung der Grünkörper führt.

Die Grünkörper können durch übliche im Stand der Technik bekannte Verfahren geformt werden. Die geformten Grünkörper können, wenn es gewünscht ist, weiter durch maschinelle Bearbeitung verformt werden.

Der Brennvorgang der Formkörper bzw. der Keramikerzeugnisse kann so lange fortgesetzt werden, bis kein Gewichtsverlust mehr zu beobachten ist. Die Dauer des Brennvorgangs kann in Abhängigkeit von der Temperatur, der Zusammensetzung der Formmasse und der Menge der erfindungsgemäß verwendeten Siloxane in der Formmasse variiert werden.

Gewichtskonstanz ist üblicherweise nach 1 bis 24 Stunden bei Temperaturen > 400 °C erreicht.

Überraschenderweise wurde nun gefunden, dass bei der Verwendung der erfindungsgemäßen Keramikbindemittel, insbesondere Keramikbindemittel, wobei das reaktive, flüssige Keramikbindemittel vorzugsweise flüssige, organomodifizierte Siloxanverbindungen aufweist, und erfindungsgemäßen Formassen enthaltend das reaktive, flüssige Keramikbindemittel:
- in verhältnismäßig kürzerer Zeit bei gleichen Brenntemperaturen; und/oder
- bei verhältnismäßig niedrigen Brenntemperaturen in vergleichbaren Zeiten ein Brand von bruchfreien keramischen Erzeugnissen mit hervorragenden physikalischen und mechanischen Eigenschaften erzielt werden kann.

Die Herstellung von geformten keramischen Erzeugnissen, wie Feuerfeststeine, kann die folgenden Schritte umfassen:
- Herstellung einer homogenen keramischen Masse, insbesondere Formmasse, aus feuerfesten keramischen Partikeln und erfindungsgemäßen Keramikbindemittel;
- gegebenenfalls Zusatz eines reaktiven Aluminiumoxids bzw. eines Al-haltigen Stoffes;
- gegebenenfalls Zusatz vom Wasser bzw. einem anderen Bindemittel und Homogenisierung der keramischen Mischung bzw. Formmasse;
- gegebenenfalls Zusatz von Additiven und weitere Homogenisierung der Mischung bzw. Formmasse;
- gegebenenfalls werden der Mischung Zusatzstoffe beigemischt, die in den fertigen Steinen bestimmte Funktionen übernehmen. Geeignete Zusatzstoffe sind beispielsweise Metallpulver, welche die Oxidationsbeständigkeit eines nichtoxidischen Keramikerzeugnisses, insbesondere eines keramischen FF-Werkstoffes, verbessern;
- Verpressen der homogenen feuerfesten Formmasse zu definierten Steinformaten. Bevorzugt werden Pressdrücke ≥ 100 MPa und ≤ 200 MPa;
- Trocknen und/oder Tempern der gepressten Steine bei Temperaturen > 50 °C; und/oder Brennen der getrockneten und/oder getemperten Steine bei Temperaturen ≥ 400° C.

Die Herstellung der ungeformten erfindungsgemäßen Feuerfest-Erzeugnisse kann bei dem Feuerfest-Hersteller bzw. vor Ort bei dem Feuerfest-Anwender, vorzugsweise in folgenden Schritten durchgeführt werden:
- Herstellung einer homogenen Keramikmasse;
- gegebenenfalls Zusatz eines aktiven Aluminiumoxids bzw. eines Al-haltigen Stoffes;
- gegebenenfalls Zusatz eines Binders, Additive und/oder Wasser und Homogenisierung des Gemenges;
- gegebenenfalls Zusatz von Zusatzstoffen und weitere Homogenisierung des Gemenges.

Nach Bedarf werden dieser Mischung Zusatzstoffe beigemischt, die in den fertigen Formmassen bestimmte Funktionen übernehmen. Beispiele für Zusatzstoffe sind Metallpulver und nichtoxidische Werkstoffe wie Kohlenstoff, Carbide, Nitride, Silicide, Metallfaser, Kunststofffaser, Carbonfaser, welche die Oxidationsbeständigkeit, Festigkeit, Trocknungsverhalten, Korrosionsbeständigkeit und/oder die Temperaturwechselbeständigkeit des Keramikerzeugnisses weiter verbessern.

Keramikmassen, insbesondere homogene Keramikmassen, können mittels in der Feuerfesttechnologie geläufigen Techniken, wie Pressen, Gießen, Vibrieren, Spritzen, Torkretieren, Stampfen und dergleichen zu einem keramischen Erzeugnis, umfassend FF-Werkstoffe, monolithische Feuerfestauskleidungen etc. verarbeitet werden.

Aus den erfindungsgemäßen Formmassen, wie Feuerfest-Formmassen, können auch Fertigbauteile hergestellt werden. Dazu werden die wie oben beschrieben hergestellten Formmassen in eine Metall-, bzw. Holz-, bzw. Kunststoffform gebracht. Durch anschließendes Vibrieren, Stampfen, Pressen usw. kann die Masse zusätzlich verdichtet werden. Nach Aushärten der Masse wird das Bauteil ausgeformt und bei 30° C bis 200° C getrocknet und/oder getempert. Nach Bedarf kann das getrocknete bzw. getemperte Bauteil gebrannt werden. Die Brennbedingungen hängen im wesentlichen von der chemischen und mineralogischen Zusammensetzung der Feuerfest-Masse sowie der Form und Geometrie des Bauteils ab. In der Regel ist ein Brand bei Temperaturen ≤ 1600 °C ausreichend. Nach dem Trocknen, Tempern und/oder Brand können die erfindungsgemäßen keramischen Fertigbauteile, insbesondere FF-Werkstoffe, einsatzbereit sein.

Das Ausmaß der Härtung ist von der Form des keramischen Erzeugnisses abhängig. Auf jeden Fall wird der keramische Formkörper so weit ausgehärtet, bis er die zur Vermeidung einer Formveränderung während des Brennvorgangs erforderliche Festigkeit besitzt.

Die erfindungsgemäßen geformten und ungeformten keramischen Erzeugnisse, wie Feuerfestwerkstoffe, können in den Öfen und Anlagen der Nichteisen-Industrie, Stahlindustrie, Zementindustrie, Glasindustrie, Müllverbrennungsanlagen usw. eingesetzt werden.

Obwohl die erfindungsgemäßen organomodifizierten Siloxane des Keramikbindemittels vorzugsweise als Bindemittel für keramische Massen geeignet sind, ist ihre Verwendung nicht hierauf beschränkt. Sie können auch in Gieß- und Pressmassen, in Anstrichmassen für E-lektroisolierungen und in Schutzüberzugsmassen für Metalloberflächen verwendet werden.

Noch ein Gegenstand der vorliegenden Erfindung betrifft das keramische Erzeugnis, insbesondere formstabile keramische Erzeugnis, selbst.

Es wurde erfindungsgemäß gefunden, dass man mittels Verwendung des erfindungsgemäßen Bindemittels aus keramischem Pulver bei Raumtemperatur oder Temperaturen von < 30° C und Einwirkzeiten von mehreren Stunden oder Tagen, keramische Erzeugnisse, insbesondere keramische Massen, herstellen kann, die formstabil sein können. Solche keramischen Erzeugnisse, insbesondere keramischen Massen, können bereits eine gute Kaltdruckfestigkeit aufweisen.

Besonders bevorzugte keramische Erzeugnisse sind feuerfeste keramische Erzeugnisse.

Das keramische Erzeugnis kann geformt oder ungeformt sein.

Erfindungsgemäß, unter einem Pressdruck von 100 MPa, hergestellte formstabile keramische Erzeugnisse können eine Kaltdruckfestigkeit nach einer Temperaturbehandlung von 2 Stunden bei 100° C bis ≤ 1000° C, bevorzugt ≤ 700° C, von ≥ 15 MPa aufweisen.

Die Herstellung und die Eigenschaften der erfindungsgemäßen Erzeugnisse sei nachstehend an einigen Beispielen erläutert.

Die flüssigen, organomodifizierten Siloxanverbindungen A bis D des erfindungsgemäßen Bindemittels wurden gemäß dem Stand der Technik hergestellt, wie er beispielsweise in DE-A1 33 12 911, EP-A1-0 124 748 und in Noll, Chemie und Technologie der Silicone (1968), Verlag Chemie, beschrieben ist. Die Indizes beziehen sich auf die Formel (1).

| Verbindung | a | B | R¹ | R² |
|---|---|---|---|---|
| A | 1,0 | 0,9 | Methyl | Ethyl |
| B | 1,0 | 0,4 | Methyl | Ethyl |
| C | 1,0 | 1,2 | Methyl | Ethyl |
| D | 1,9 | 0,1 | Methyl | Ethyl |

### Beispiel 1

### Bindekraft in Korundsteinen

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 - 2 mm | 50 Gew.-% |
| Mittelkorn | 0.2 - 0.5 mm | 10 Gew.-% |
| Mehl | < 0.1 mm | 40 Gew.-% |

wurde mit 4. Gew.-Anteilen der Verbindung A homogen gemischt. Zum Vergleich wurde eine Formmasse mit 4 Gew.-Anteilen von Sulfitlauge (ohne Verbindung A) hergestellt. Aus den Mischungen wurden Prüfkörper unter einem Pressdruck von 100 MPa hergestellt und anschließend bei 600, und 1500 °C, 2 h gebrannt. Nach dem Brand besaßen die Prüfkörper folgende Kennwerte:

| | Mit Verbindung A | | Ohne Verbindung A | |
|---|---|---|---|---|
| | 600 °C | 1500 °C | 600 °C | 1500 °C |
| Kaltdruckfestigkeit (MPa) (nach DIN EN 993-1) | > 50 | > 100 | < 5 | < 25 |

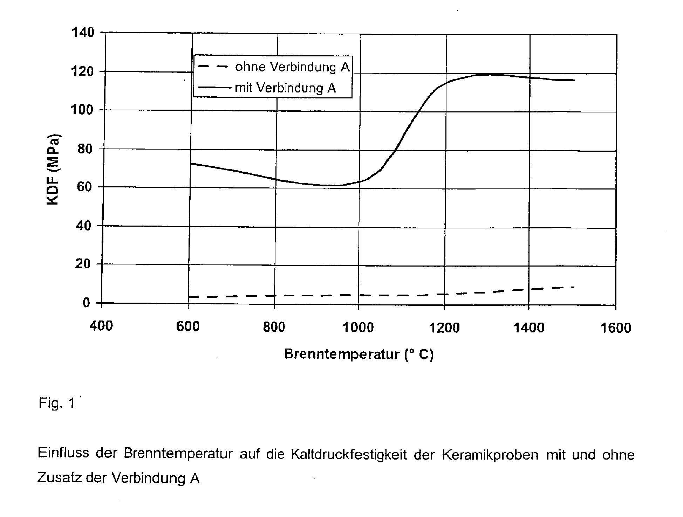

Die Unterschiede in der Entwicklung der Kaltdruckfestigkeit in Abhängigkeit von der Brenntemperatur in Proben mit und ohne Verbindung A sind in Figur 1 dargestellt.

Der Zusatz von Verbindung A bewirkt eine enorme Steigerung der Festigkeit der Keramik.

### Beispiel 2

### Bindekraft unterschiedlicher Verbindungen

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 - 2 mm | 50 Gew.-% |
| Mittelkorn | 0.2 - 0.5 mm | 10 Gew.-% |
| Mehl | < 0.1 mm | 40 Gew.-% |

wurde mit jeweils 4. Gew.-Anteilen der Verbindung A, B, C und D homogen gemischt. Aus den Mischungen wurden Prüfkörper unter einem Pressdruck von 100 MPa hergestellt und anschließend bei 600 °C, 2 h gebrannt. Nach dem Brand besaßen die Prüfkörper folgende Kennwerte:

| | Verbindung | | | |
|---|---|---|---|---|
| | A | B | C | D |
| Kaltdruckfestigkeit (MPa) (nach DIN EN 993-1) | > 50 | > 80 | > 60 | > 10 |

Der Zusatz von Verbindungen A, B und C bewirkt eine hohe Steigerung der Festigkeit der Korundsteine. Die Verbindung D entwickelt nach einem Brand von 600 °C eine erhöhte Bindekraft bzw. Festigkeit der Korundsteine.

### Beispiel 3

### Bindekraft einer wässrigen Emulsion

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 - 2 mm | 50 Gew.-% |
| Mittelkorn | 0.2 - 0.5 mm | 10 Gew.-% |
| Mehl | < 0.1 mm | 40 Gew.-% |

wurde mit 5. Gew.-Anteilen einer 50-%igen wässrigen Emulsion der Verbindung B homogen gemischt. Zum Vergleich wurde eine Formmasse mit 4 Gew.-Anteilen von Sulfitlauge (ohne Verbindung B) hergestellt. Aus den Mischungen wurden Prüfkörper unter einem Pressdruck von 100 MPa hergestellt und anschließend bei 600, und 1400 °C, 2 h gebrannt. Nach dem Brand besaßen die Prüfkörper folgende Kennwerte:

| | Mit Emulsion der Verbindung B | | Ohne Verbindung B | |
|---|---|---|---|---|
| | 600 °C | 1400 °C | 600 °C | 1400 °C |
| Kaltdruckfestigkeit (MPa) (nach DIN EN 993-1) | > 10 | > 25 | < 5 | < 20 |

Die wässrige Emulsion der Verbindung B eignet sich als Bindemittel für Korundsteine

### Beispiel 4

### Einfluss der Brenndauer auf die Bindekraft in Korundsteinen

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 - 2 mm | 50 Gew.-% |
| Mittelkorn | 0.2 - 0.5 mm | 10 Gew.-% |
| Mehl | < 0.1 mm | 40 Gew.-% |

wurde mit 4. Gew.-Anteilen der Verbindung B homogen gemischt. Aus den Mischungen wurden Prüfkörper unter einem Pressdruck von 100 MPa hergestellt und anschließend bei 1200 °C 2, 6 und 10 h gebrannt. Nach dem Brand besaßen die Prüfkörper folgende Kennwerte:

| | Brenndauer bei 1200 °C | | |
|---|---|---|---|
| | 2 h | 6 h | 10 h |
| Kaltdruckfestigkeit (MPa) (nach DIN EN 993-1) | > 90 | >100 | >100 |

Die Dauer des Brennvorgangs hat keinen relevanten Einfluss auf die Festigkeit der Korundwerkstoffe mit Zusatz der Verbindung B.

### Beispiel 5

### Einfluss der Verbindung B in Abhängigkeit der Konzentration

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 - 2 mm | 50 Gew.-% |
| Mittelkorn | 0.2 - 0.5 mm | 10 Gew.-% |
| Mehl | < 0.1 mm | 40 Gew.-% |

wurde mit 2, 4 und 10 Gew.-Anteilen der Verbindung B, homogen gemischt. Aus den Mischungen wurden Prüfkörper unter einem Pressdruck von 100 MPa hergestellt und anschließend bei 600 °C, 2 h gebrannt.

Nach dem Brand besaßen die Prüfkörper folgende Kennwerte:

| | 2 % Verbindung B | 4 % Verbindung B | 10 % Verbindung B |
|---|---|---|---|
| Kaltdruckfestigkeit (MPa) (nach DIN EN 993-5) | > 40 | > 60 | > 50 |

### Beispiel 6

### Verbesserung der Bindekraft durch Zusatz eines aktiven Al₂O₃

Ein hochreiner SiC-Rohstoff, SiC dunkel/dark, erhältlich bei der Firma ESK-SiC GmbH in Frechen, mit folgendem Kornaufbau:

| | | |
|---|---|---|
| Grobkorn | 1 - 2 mm | 50 Gew.-% |
| Mehl | < 0.06 mm | 50 Gew.-% |

wurde mit 4 Gew.-Anteilen der Verbindung A homogen gemischt. Zum Vergleich wurde auch einer Mischung mit 10 Gew.-Anteilen von Mikro-Al2O3-Pulver, calcinierte Tonerde CTC 50 , erhältlich bei der Firma ALMASIT in Ludwigshafen, ohne Verbindung A hergestellt. Aus den Mischungen wurden Prüfkörper unter einem Pressdruck von 100 MPa hergestellt und anschließend bei 600 °C und 1500 °C, 2 h gebrannt. Nach dem Brand besaßen die Prüfkörper folgende Kennwerte:

| | Ohne Aluminiumoxid | | Mit Aluminiumoxid | |
|---|---|---|---|---|
| | 600 °C | 1500 °C | 600 °C | 1500 °C |
| Kaltdruckfestigkeit (MPa) (DIN EN 993-5) | > 20 | > 70 | > 40 | > 120 |

Der Zusatz eines reaktiven Aluminiumoxids trägt zur einen erheblichen Steigerung der Werkstofffestigkeit bei.

### Beispiel 7

### Bindekraft in Magnesiasteinen

Ein hochreiner MgO-Sinter, NEDMAG, erhältlich bei der Firma NedMag Industries B.V. in Veendam, Niederlanden , mit folgendem Kornaufbau:

| | | |
|---|---|---|
| Grobkorn | 1 - 2 mm | 50 Gew.-% |
| Mittelkorn | 0.2 - 0.5 mm | 10 Gew.-% |
| Mehl | < 0.1 mm | 40 Gew.-% |

wurde mit 4. Gew.-Anteilen der Verbindung A, homogen gemischt. Zum Vergleich wurde eine Mischung mit 4 Gew.-Anteilen von Sulfitlauge ohne Verbindung A hergestellt. Aus den Mischungen wurden Prüfkörper unter einem Pressdruck von 100 MPa hergestellt und anschließend bei 600, und 1500 °C, 2 h gebrannt. Nach dem Brand besaßen die Prüfkörper folgende Kennwerte:

| | Mit Verbindung A | | Ohne Verbindung A | |
|---|---|---|---|---|
| | 600 °C | 1500 °C | 600 °C | 1500 °C |
| Kaltdruckfestigkeit (MPa) (DIN EN 993-5) | > 35 | > 40 | < 5 | < 25 |

Der Zusatz von Verbindung A bewirkt auch in basischen MgO-Steinen eine erhebliche Steigerung der Festigkeit.

### Beispiel 8

### Bindekraft in Korundsteinen mit Grafitzusatz

Ein hochreiner Sinterkorund, T60, erhältlich bei der Firma ALMATIS in Ludwigshafen, mit folgendem Kornaufbau:

| | | |
|---|---|---|
| Grobkorn | 1 - 2 mm | 50 Gew.-% |
| Mehl | < 0.1 mm | 40 Gew.-% |
| Grafit, Flocken | <0.2 mm | 10 Gew.% |

wurde mit 4. Gew.-Anteilen der Verbindung B, homogen gemischt. Zum Vergleich wurde ein Versatz mit 4 Gew.-Anteilen von Sulfitlauge ohne Verbindung B hergestellt. Aus den Mischungen wurden Prüfkörper unter einem Pressdruck von 100 MPa hergestellt und anschließend bei 600, und 1500 °C, 2 h oxidierend gebrannt. Nach dem Brand wurde ein Teil der Prüfkörper in der Mitte durchgeschnitten. Die Größe des Schwarzkerns (unausgebrannter Grafit) bezogen auf die gesamte Schnittfläche diente als Maß für die Oxidationsbeständigkeit.

Nach dem Brand besaßen die Prüfkörper folgende Kennwerte:

| | Mit Verbindung B | | Ohne Verbindung B | |
|---|---|---|---|---|
| | 600 °C | 1500 °C | 600 °C | 1500 °C |
| Kaltdruckfestigkeit (MPa) | > 15 | > 30 | < 3 | < 5 |
| Unausgebrannter Grafit (%) | ≈100 | < 15 | ≈100 | ≈ 0 |

Der Zusatz der Verbindung B verleiht auch den kohlenstoffhaltigen Korundsteinen eine erhebliche Festigkeit. Außerdem zeigten die Untersuchungen, dass die Verbindung B die Oxidationsbeständigkeit des Kohlenstoffs verbessert.

### Beispiel 9

### Bindemittel für Korundbetone

Es wurde vier unterschiedliche Mischungen mit folgendem Kornaufbau aufbereitet:

| | | |
|---|---|---|
| Sinterkorund, T60, Grobkorn | 1 - 2 mm | 35 Gew.-% |
| Sinterkorund, T60, Feinkorn | < 45 µm | 35 Gew.-% |
| Calcinierte Tonerde, CTC 50, | < 15 µm | 30 Gew.% |

Alle Rohstoffe sind bei der Fa. ALMATIS in Ludwigshafen erhältlich.
Zu den vier Mischungen wurden 1,5 Gew.-Anteile der Verbindung A und 12 Gew.-Anteile Wasser zugesetzt. Nach Homogenisierung entstand ein selbstfließender Korundbeton. Aus der Mischung wurden Prüfkörper in einer Kunststoffform gegossen und bei 80 °C 24 h, getrocknet. Die Prüfkörper wurden anschließend bei 600, 800, 1000 und 1500 °C, 2 h gebrannt.

Nach dem Brand besaßen die Prüfkörper folgende Kennwerte:

| | 600 °c | 1000 °C | 1200 °C | 1500 °C |
|---|---|---|---|---|
| Kaltdruckfestigkeit (MPa) (DN EN 993-5) | > 80 | > 80 | > 140 | > 220 |

Der Korundbeton mit einem relativ geringen Zusatz der Verbindung A zeichnet sich durch eine hohe Festigkeit aus.

### Beispiel 10

### Korundstampfmasse

Es wurden insgesamt vier unterschiedliche Mischung mit folgendem Kornaufbau aufbereitet:

| | | |
|---|---|---|
| Sinterkorund, T60, Grobkorn | 1 - 2 mm | 50 Gew.-% |
| Sinterkorund, Mittelkorn, | 0.2-0.5 mm | 10 % Gew.% |
| Sinterkorund, T60, Mehl | | 40 Gew.-% |

Alle Rohstoffe sind bei der Fa. ALMATIS in Ludwigshafen erhältlich. Zu den vier Mischungen wurden 5 Gew.-Anteile der Verbindung C gegeben. Die Formmasse wurde nach Homogenisierung durch Schläge in einer Stahlform verdichtet. So hergestellte Prüfkörper wurden anschließend bei 600° C, und 1500° C, 2 h gebrannt. Nach dem Brand besaßen die vier Prüfkörper folgende Kennwerte:

| | 600° C | 1500° C |
|---|---|---|
| Kaltdruckfestigkeit (MPa) (DIN EN 1402-6) | > 50 | > 70 |

Die Verbindung C eignet sich auch als wasserfreies Bindemittel zur Herstellung von Stampfmassen sehr gut.

## Patentansprüche

1. Reaktives Keramikbindemittel in flüssiger Form, geeignet zur Herstellung von keramischen Erzeugnissen aus Keramikpulver, **dadurch gekennzeichnet, dass** das reaktive, flüssige Keramikbindemittel flüssige organomodifizierte Siloxanverbindungen aufweist, wobei die organomodifizierten Siloxanverbindungen Organoalkoxysiloxaneinheiten gemäß der allgemeinen Formel (I) 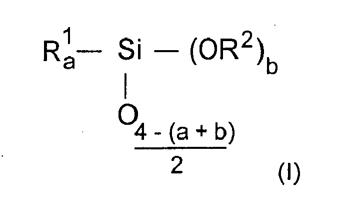 aufweisen, worin
R¹ = Alkylrest und/oder Arylrest,
R² = H und/oder Alkylrest mit 1 bis 4 Kohlenstoffatomen,
a ≥ 0 und ≤ 2 und
b > 0 und ≤ 3,
mit der Maßgabe, dass a + b ≥ 1 und ≤ 4 ist.

2. Keramikbindemittel nach Anspruch 1, wobei der Anteil H für R² der organomodifizierte Siloxanverbindung ≥ 0 % und ≤ 10 %, bevorzugt ≥ 0 % und ≤ 5 %, besonders bevorzugt ≥ 0 % und ≤ 1 %, ausmacht.

3. Keramikbindemittel nach Anspruch 1 oder 2, worin
R¹ = Phenyl und/oder C₁-C₁₆-Alkylrest sind, vorzugsweise ist R¹ = C₁-C₁₂-Alkylrest, weiter bevorzugt ist R¹ = C₁-C₈-Alkylrest, besonders bevorzugt ist R¹ = C₁-C₄-Alkylrest, wobei am meisten bevorzugt ist R¹ = Methyl und/oder Ethyl; und/oder
R² = H, Methyl, Ethyl, Propyl, Iso-Propyl, Butyl, tert-Butyl, wobei Methyl und/oder Ethyl am meisten bevorzugt sind.

4. Keramikbindemittel nach einem der vorherigen Ansprüche 1 bis 3, wobei a = 0,5 bis 1,8 ist, vorzugsweise ist a = 0,7 bis 1,7, und weiter bevorzugt ist a = 1,0 bis 1,5, mit der Maßgabe, dass a + b ≤ 4 und vorzugsweise a + b ≤ 3.

5. Keramikbindemittel nach einem der vorherigen Ansprüche 1 bis 4, wobei b = 0,1 bis 2,5 ist, vorzugsweise ist b = 0,2 bis 2,3, noch weiter bevorzugt ist b = > 0,3 bis 2,0 und besonders bevorzugt ist b = > 0,3 bis 1,2, mit der Maßgabe, dass a + b ≤ 4 und vorzugsweise a + b ≤ 3 ist.

6. Keramikbindemittel nach einem der vorherigen Ansprüche 1 bis 5, worin das reaktive, flüssige Keramikbindemittel ein Lösungsmittel enthält, ausgewählt aus der Gruppe, umfassend, organische Lösungsmittel, vorzugsweise flüssige Kohlenwasserstoffe, insbesondere mit einem Siedepunkt zwischen 40° C bis 100° C, Alkohol und/oder Aceton.

7. Keramikbindemittel nach einem der vorherigen Ansprüche 1 bis 6, wobei das reaktive, flüssige Keramikbindemittel Wasser enthält und vorzugsweise in Form einer wässrigen Emulsion vorliegt.

8. Keramikbindemittel nach einem der Ansprüche 1 bis 7, worin die organomodifizierten Siloxanverbindungen, ein Molekulargewicht von 120 bis 100.000, vorzugsweise 250 bis 80.000, bevorzugt 500 bis 60.000, noch bevorzugt 750 bis 50.000 und besonders bevorzugt 1.000 bis 30.000 aufweisen.

9. Keramikbindemittel nach einem der Ansprüche 1 bis 8, worin dem Keramikbindemittel mindestens ein Additiv zugesetzt ist, wobei dieses Additiv unterschiedlich zu der flüssigen organomodifizierten Siloxanverbindung auf Basis der Formel (I) ist, ausgewählt aus der Gruppe umfassend ein anorganisches Bindemittel, ein anorganisches Salz der Schwefelsäure, ein anorganisches Salz der Salzsäure, ein anorganisches Salz der Phosphorsäure, Magnesiumchlorid, Magnesiumsulfat, Monoaluminiumphosphat, Alkaliphosphat, Alkalisilikat, Wasserglas, ein organisches Bindemittel, Zellulosederivat, Polyvinylalkohol, Wasser, organische Lösungsmittel, Formentrennmittel, Stabilisatoren, organische Pigmente, anorganische Pigmente, Oxide, Metalloxide, nichtoxidische Stoffe, vorzugsweise Kohlenstoff, Metallpulver, Metallfasern, Keramikfasern, Glasfasern, Naturfasern, Kunststofffasern, Carbide, Nitride, Silicide, Polymere, Verflüssiger, Abbindeverzögerer, Abbindebeschleuniger, Presshilfsmittel, Gleitmittel, Stellmittel, Entschäumer, Verflüssiger, Sintermittel, Katalysatoren und/oder Carbonfasern, wobei das Keramikbindemittel bevorzugt nanoskalige Metalloxide, bevorzugt nanoskaliges Aluminiumoxid, aufweist.

10. Verwendung von Keramikbindemittel nach einem der Ansprüche 1 bis 9 zur Herstellung von formstabilen keramischen Erzeugnissen, insbesondere formstabilen, feuerfesten, keramischen Erzeugnissen, aus Keramikpulvern.

11. Verwendung von Keramikbindemittel nach einem der vorherigen Ansprüche zur Herstellung von gepressten und/oder temperaturbehandelten, formstabilen keramischen Erzeugnissen.

12. Verwendung von Keramikbindemittel nach einem der vorherigen Ansprüche zur Herstellung von ungeformten keramischen Erzeugnissen, insbesondere von ungeformten feuerfesten keramischen Erzeugnissen

13. Verwendung von Keramikbindemittel nach einem der vorherigen Ansprüche, wobei die organomodifizierten Siloxanverbindungen des Keramikbindemittels dem Keramikpulver, bezogen auf das Gesamtgewicht des Keramikpulvers, mit einem Gewichtsanteil von 0,01 Gew.-% bis 70 Gew.-%, vorzugsweise von 0,5 Gew.-% bis 50 Gew.-% und bevorzugt von 0,1 Gew.-% bis 30 Gew.-% zugesetzt wird.

14. Keramikmasse, worin die Keramikmasse Keramikbindemittel nach einem der Ansprüche 1 bis 9 und Keramikpulver aufweist.

15. Keramikmasse nach Anspruch 14, wobei die Keramikmasse nanoskalige Metalloxide, bevorzugt nanoskaliges Aluminiumoxid, aufweist.

16. Keramikmasse nach Anspruch 14 oder 15, wobei die Keramikmasse vorzugsweise ein Schüttgewicht von 500 g/l bis 2000 g/l, vorzugsweise von 600 g/l bis 1800 g/l, weiter bevorzugt von 700 g/l bis 1600 g/l, bevorzugt von 800 g/l bis 1500 g/l und besonders bevorzugt von 850 g/l bis 1200 g/l aufweist.

17. Keramikmasse nach einem der Ansprüche 14 bis 16, worin die Keramikmasse Zusatzstoffe aufweist, ausgewählt aus der Gruppe umfassend organische Bindemittel und/oder anorganische Bindemittel.

18. Keramikmasse nach einem der Ansprüche 14 bis 17, wobei die Keramikmasse eine Spritzgussformmasse, Stampfmasse, Betonmasse, Rammmasse, Gießmasse, Anstrichmasse oder Überzugsmasse ist.

19. Verfahren zur Herstellung von geformten formstabilen keramischen Erzeugnissen, insbesondere feuerfesten formstabilen keramischen Erzeugnissen, **dadurch gekennzeichnet, dass** das Verfahren die nachstehenden Schritte umfasst:
a) mischen von Keramikbindemittel gemäß einem der Ansprüche 1 bis 9 mit Keramikpulver zwecks Erzeugung einer Formmasse,
b) Verfestigung der Formmasse erhalten aus Schritt a) mittels Druckbehandlung und/oder Temperaturbehandlung, wobei ein formstabiles keramisches Erzeugnis erhalten wird.

20. Verfahren nach Anspruch 19, gemäß dem das reaktive, flüssige Keramikbindemittel, bezogen auf das Gesamtgewicht des Keramikpulvers in der Formmasse mit einem Gewichtsanteil von 0,01 Gew.-% bis 70 Gew.-%, vorzugsweise von 0,5 Gew.-% bis 50 Gew.-% und bevorzugt von 0,1 Gew.-% bis 30 Gew.-% enthalten ist.

21. Verfahren nach Anspruch 19 oder 20, wobei die aus Schritt a) erhaltene Mischung auf einen formstabilen Träger aufgebracht wird.

22. Verfahren nach einem der Ansprüche 19 bis 21, wobei dem Keramikpulver noch ein Additiv, Zusatzstoff und/oder Bindemittel zugesetzt wird, wobei dem Keramikpulver vorzugsweise nanoskalige Metalloxide und bevorzugt nanoskaliges Aluminiumoxid zugesetzt wird.

23. Verfahren nach einem der Ansprüche 19 bis 22, wobei die aus Schritt a) erhaltene Mischung verfestigt wird, in dem
- die Keramikmasse bei einer Temperatur von 50° C bis < 200° C getrocknet; und/oder
- bei einer Temperatur von ≥ 200° C bis < 1.000° C getempert; und/oder
- bei einer Temperatur von ≥ 1.000° C gebrannt wird.

24. Verfahren zur Herstellung von ungeformten keramischen Erzeugnissen, insbesondere feuerfesten keramischen Erzeugnissen, **dadurch gekennzeichnet, dass** das Verfahren die nachstehenden Schritte umfasst:
a) Mischen von reaktivem, flüssigen Keramikbindemittel gemäß einem der Ansprüche 1 bis 9 mit Keramikpulver;
b) ggf. Zusatz von Additiven, Hilfs- und/oder Zusatzstoffen und/oder anderen Bindemitteln;
c) Erzeugung einer keramischen Masse, umfassend Betonmasse, Gießmasse, Stampfmasse oder Rammmasse.

25. Verfahren nach Anspruch 24, gemäß dem das reaktive, flüssige Keramikbindemittel, bezogen auf das Gesamtgewicht des Keramikpulvers in der Keramikmasse mit einem Gewichtsanteil von 0,01 Gew.-% bis 70 Gew.-%, vorzugsweise von 0,5 Gew.-% bis 50 Gew.-% und bevorzugt von 0,1 Gew.-% bis 30 Gew.-% enthalten ist.

26. Keramisches Erzeugnis herstellbar nach einem der Ansprüche 19 bis 25.
